# EUROPÄISCHE PATENTSCHRIFT

(11) **EP 1 508 517 B1**
(45) Veröffentlichungstag und Bekanntmachung des Hinweises auf die Patenterteilung: **18.10.2006**
(21) Anmeldenummer: 04018789.0
(22) Anmeldetag: 07.08.2004
(51) Int. Cl.: B64D 31/04

(54) **Kraftgesteuerter Schubregler zum Einstellen des Triebwerkschubs eines Kampfflugzeugs**
Force-controlled power lever for adjusting the thrust of the engine of a combat aircraft
Manette de gaz pour le contrôle de la puissance du moteur d'un avion de combat et controlée par la force appliquée

(30) Priorität: 19.08.2003 DE 10338026
(43) Veröffentlichungstag der Anmeldung: 23.02.2005
(73) Patentinhaber: EADS Deutschland GmbH, 85521 Ottobrunn (DE)
(72) Erfinder: Ashbolt, Clive, D-85521 Ottobrunn (DE); Dr. Buro, Thomas, D-81675 München (DE); Haarmann, Richard, D-70190 Stuttgart (DE)

(56) Entgegenhaltungen:
- EP-A- 0 326 439
- EP-A- 0 453 002
- EP-A- 0 875 451
- GB-A- 2 313 176

## Beschreibung

Die Erfindung betrifft einen kraftgesteuerten Schubregler, in der meist englischsprachigen Fachliteratur sowie im Folgenden auch als 'Throttle' bezeichnet, zum Einstellen des Triebwerkschubs eines Kampfflugzeugs.

In einem Kampfflugzeug wird der Triebwerkschub mit der "Throttle", d.h. mit einem handbetätigten Schubhebel, vom Piloten geregelt. Der normale Regelbereich erstreckt sich von Leerlauf (idle) bis voller Schub (max dry). Zusätzlich kann, sofern ein solcher vorgesehen ist, der Nachbrenner eingeschaltet, geregelt und ausgeschaltet werden (min/max Afterburner). Herkömmlicherweise wird der Schubhebel hierzu auf einer Länge von ca. 150 bis 200 mm verstellt.

Die Throttle sollte verschiedene ergonomische Anforderungen an die Kraft-, Weg- und Bewegungscharakteristik erfüllen, damit der Pilot den Schub schnell und präzise einstellen kann. Bei der Landung beispielsweise müssten sehr feine und genaue Eingaben vorgenommen werden können. Die Throttle darf dabei nicht ruckeln. Andererseits sollten unabsichtliche Eingaben vermieden werden, die nötige Kraft zur Verstellung sollte daher nicht zu klein sein. Der Nachbrennerbereich muss deutlich abgetrennt sein, damit er nicht unabsichtlich angewählt wird. Diese Anforderungen haben zur Entwicklung komplexer und teurer elektronischer sog. Force Feedback Throttle Einheiten geführt.

Als bekannt vorausgesetzt wird eine Throttle, d.h. ein Schubhebel zum Einstellen des Triebwerkschubs eines Kampfflugzeugs mit einem Handgriff zur Betätigung durch einen Piloten und einer mit dem Handgriff gekoppelten Signalerzeugungseinrichtung zur Erzeugung eines zum Einstellen des Triebwerkschubs verwendeten Steuersignals.

Derzeit bekannte Throttles dieser Art arbeiten mit einem den Handgriff tragenden und mit der Signalerzeugungseinrichtung gekoppelten Hebel, der nach Art einer rotierenden Bewegung um eine Achse drehbar oder der linear verschiebbar gelagert ist.

Bei modernen Flugzeugen werden die Triebwerke elektronisch geregelt ("by wire"), trotzdem ist die Art der Bedienung beibehalten worden, die noch auf den Erfordernissen älterer Flugzeuge beruht, bei denen die Triebwerke über ein Gestänge geregelt werden (z.B. Mig 29). Die Abtrennung des Nachbrennerbereichs erfolgt herkömmlich über eine Kulisse (seitliche Bewegung des Griffs) oder über eine zusätzliche Kraft, die überwunden werden muss, oder über einen zusätzlich zu betätigenden Hebel. Diese konventionelle Bauweise beinhaltet jedoch einige Nachteile gemessen an den Erfordernissen an ein modernes Kampfflugzeug. Reibung in der Mechanik behindert präzise Eingaben. Geräte mit mechanischen Reibungsbremsen müssen häufig gewartet und eingestellt werden. In einem Trainer-Flugzeug müssen die Throttles gekoppelt sein, so dass sie in der gleichen Stellung stehen. Zusätzlich muss der Instructor die Möglichkeit haben, die Kontrolle vollständig zu übernehmen. Mit einer mechanischen Kopplung der Throttles ist dies nur mit erheblichem Aufwand durch ein Gestänge zwischen dem vorderen und dem hinteren Cockpit zu erreichen.

Aus der EP-A-0 326 439 ist ein kraftgesteuerter Schubregler zur Einstellung des Schubes des Triebwerks eines Kampfflugzeugs bekannt. Er weist einen Schubhebel mit Handgriff zur Betätigung durch einen Piloten auf, wobei der Schubhebel mit einem Signalerzeuger in Form eines Druckumformers zum Einstellen des Triebwerkschubes gekoppelt ist.

Die Aufgabe der Erfindung ist es, eine insbesondere hinsichtlich des benötigten Bauraums verbesserte kraftgesteuerte Throttle zum Einstellen des Triebwerkschubs eines Kampfflugzeugs zu schaffen.

Diese Aufgabe wird erfindungsgemäß durch eine kraftgesteuerte Throttle mit den Merkmalen des Anspruchs 1 gelöst.

Vorteilhafte Weiterbildungen der erfindungsgemäßen kraftgesteuerten Throttle sind in den Unteransprüchen gekennzeichnet.

Durch die Erfindung wird eine kraftgesteuerte Throttle zum Einstellen des Triebwerkschubs eines Kampfflugzeugs mit einem Handgriff zur Betätigung durch einen Piloten und einer mit dem Handgriff gekoppelten Signalerzeugungseinrichtung zur Erzeugung eines zum Einstellen des Triebwerkschubs verwendeten Steuersignals geschaffen. Erfindungsgemäß ist es vorgesehen, dass die Signalerzeugungseinrichtung zur Erzeugung des Steuersignals in Abhängigkeit von der bei der Betätigung durch den Piloten auf den Handgriff ausgeübten Kraft vorgesehen ist.

Die erfindungsgemäße Lösung besteht somit in einer kraftgesteuerten Throttle, die sich gegenüber den herkömmlichen, weggesteuerten Schubhebeln kaum noch bewegt. Die Steuerung des Schubs erfolgt über die Kraft, die auf die Throttle ausgeübt wird. Nach vorne drücken erhöht die Triebwerksleistung, nach hinten ziehen reduziert sie. Aufgrund der geringen Bewegung kann der Throttlegriff über einen Hebelarm von der Mechanik, also von der mit dem Handgriff gekoppelten Signalerzeugungseinrichtung getrennt sein. Der Throttlegriff kann in der optimalen Höhe (Höhe des Herzens des Piloten) angeordnet werden. Die Throttlemechanik kann getrennt davon in der Cockpit-Seitenwand eingebaut werden. Dies schafft zusätzlichen Raum für Displays und Controls im Cockpit. Aufgrund der geringen Größe könnte die Throttle in bestehenden Flugzeugen nachgerüstet werden. Ein besonderer Vorteil ist es, dass die Regelung des Triebwerks sehr präzise durch feine und genaue Eingaben vorgenommen werden kann.

Erfindungsgemäß enthält die Signalerzeugungseinrichtung ein gegen die durch den Piloten ausgeübte Kraft federnd elastisches Betätigungselement und einen mit dem Betätigungselement funktionsmäßig verbundenen Signalerzeuger zur Erzeugung des Steuersignals so, dass es die durch den Piloten auf den Handgriff ausgeübte Kraft repräsentiert, und eine signalmäßig mit dem Signalerzeuger verbundene Stellsignalerzeugungseinrichtung zum Erzeugen eines den absoluten Wert des einzustellenden Triebwerkschubs repräsentierenden Stellsignals aus dem Steuersignal.

Vorzugsweise ist hierbei das Betätigungselement entsprechend einer vom Piloten ausgeübten Kraft über einen vorgegebenen Betätigungsweg bewegbar angeordnet, und der mit dem Betätigungselement funktionsmäßig gekoppelte Signalerzeuger ist zur Erzeugung eines dem Betätigungsweg entsprechenden Steuersignals vorgesehen.

Vorzugsweise ist das Betätigungselement schwenkbar oder verschiebbar gelagert und mit einer Federeinrichtung gekoppelt, die eine der Bewegung über den vorgegebenen Betätigungsweg entgegenwirkende Gegenkraft erzeugt.

Gemäß einer bevorzugten Ausführungsform der Erfindung ist es vorgesehen, dass das Betätigungselement entsprechend einer vom Piloten ausgeübten Kraft ausgehend von einer kraftfreien Grundstellung in einer ersten Richtung oder in einer der ersten Richtung entgegengesetzten zweiten Richtung bewegbar angeordnet ist, wobei der Signalerzeuger bei Bewegung in der ersten Richtung zur Erzeugung von Steuersignalen im Sinne einer Erhöhung des Triebwerkschubs und bei Bewegung in der zweiten Richtung zur Erzeugung von Steuersignalen im Sinne einer Verringerung des Triebwerkschubs vorgesehen ist.

Gemäß einer weiteren bevorzugten Ausführungsform der Erfindung ist es vorgesehen, dass der Signalerzeuger ein sich mit der Größe des Betätigungsweges stetig änderndes Steuersignal erzeugt.

Weiter ist es gemäß einer bevorzugten Ausführungsform der Erfindung vorgesehen, dass das Betätigungselement in der ersten Richtung zwischen der Grundstellung und einem ersten Anschlag, der einer maximalen Kraft in der ersten Richtung entspricht, und in der zweiten Richtung zwischen der Grundstellung und einem zweiten Anschlag, der einer maximalen Kraft in der zweiten Richtung entspricht, bewegbar ist, wobei der Signalerzeuger bei Bewegung des Betätigungselements in der ersten Richtung einer Erhöhung des Triebwerkschubs und bei Bewegung des Betätigungselements in der zweiten Richtung einer Verringerung des Triebwerkschubs entsprechende Steuersignale erzeugt.

Gemäß einer weiteren bevorzugten Ausführungsform der Erfindung ist es für Flugzeuge, die über einen Nachbrenner verfügen, vorgesehen, dass im Betätigungsweg des Betätigungselements in der ersten Richtung zwischen der Grundstellung und dem ersten Anschlag eine erste definierte Position vorgesehen ist, über die hinaus der Betätigungsweg in der ersten Richtung nur unter deutlicher unstetiger Vergrößerung der durch den Piloten ausgeübten Kraft vergrößerbar ist, wobei bei einer Vergrößerung des Betätigungswegs über die definierte Position hinaus der Signalerzeuger bei ausgeschaltetem Nachbrenner ein einem Einschalten des Nachbrenners entsprechendes Steuersignal erzeugt.

Hierbei ist es gemäß einer bevorzugten Ausführungsform der Erfindung vorgesehen, dass im Betätigungsweg des Betätigungselements in der zweiten Richtung zwischen der Grundstellung und dem zweiten Anschlag eine zweite definierte Position vorgesehen ist, über die hinaus der Betätigungsweg des Betätigungselements in der zweiten Richtung nur unter deutlicher unstetiger Vergrößerung der durch den Piloten ausgeübten Kraft vergrößerbar ist, wobei bei einer Vergrößerung des Betätigungswegs über die zweite definierte Position hinaus der Signalerzeuger bei eingeschaltetem Nachbrenner ein einem Ausschalten des Nachbrenners entsprechendes Steuersignal erzeugt.

Gemäß einer bevorzugten Ausführungsform der Erfindung ist es vorgesehen, dass eine Bewegung des Betätigungselements in der ersten Richtung zwischen der Grundstellung und der ersten definierten Position bei ausgeschaltetem Nachbrenner einer Erhöhung des Triebwerkschubs bis auf maximalen Schub ohne Nachbrenner entspricht.

Gemäß einer bevorzugten Ausführungsform der Erfindung ist es vorgesehen, dass eine Bewegung des Betätigungselements in der ersten Richtung zwischen Grundstellung und der ersten definierten Position bei eingeschaltetem Nachbrenner einer Erhöhung des Triebwerkschubs bis auf maximalen Schub mit Nachbrenner entspricht.

Vorzugsweise entspricht eine Bewegung des Betätigungselements in der zweiten Richtung zwischen der Grundstellung und der zweiten definierten Position bei ausgeschaltetem Nachbrenner einer Verringerung des Triebwerkschubs bis auf Leerlauf.

Vorzugsweise entspricht eine Bewegung des Betätigungselements in der zweiten Richtung zwischen der Grundstellung und der zweiten definierten Position bei eingeschaltetem Nachbrenner einer Verringerung des Triebwerkschubs bis auf minimalen Schub mit Nachbrenner.

Gemäß einer bevorzugten Ausführungsform der Erfindung ist es vorgesehen, dass das Betätigungselement durch einen Hebelarm eines um eine Drehachse drehbar gelagerten Hebels gebildet ist, dessen Ende dem vom Piloten betätigten Handgriff trägt.

Hierbei ist vorzugsweise der Hebel ein um eine in einem mittleren Bereich vorgesehene Drehachse drehbar gelagerter zweiseitiger Hebel, dessen einer Hebelarm den vom Piloten zu betätigenden Handgriff trägt und dessen anderer Hebelarm das Betätigungselement bildet.

Gemäß einer bevorzugten Ausführungsform der Erfindung ist es vorgesehen, dass die Federeinrichtung durch in Bewegungsrichtung des Betätigungselements wirksame, mit dem Betätigungselement gekoppelte Federelemente gebildet ist.

Gemäß einer besonders bevorzugten Ausführungsform der Erfindung ist es dabei vorgesehen, dass die Federelemente in Bewegungsrichtung des Betätigungselements paarweise einander gegenüberliegend beiderseits des Betätigungselements angeordnet sind.

Hierbei ist es gemäß einer besonders bevorzugten Ausführungsform der Erfindung vorgesehen, dass ein erstes Paar von Federelementen und ein zweites Paar von Federelementen vorgesehen sind, die in Bewegungsrichtung des Betätigungselements jeweils paarweise einander gegenüberliegend beiderseits des Betätigungselements angeordnet sind, wobei das erste Paar von Federelementen eine zwischen der Grundstellung und dem ersten bzw. zweiten Anschlag des Betätigungselements stetig zunehmende Gegenkraft gegen die durch den Piloten auf den Handgriff ausgeübte Kraft erzeugt und das zweite Paar von Federelementen eine zusätzliche Gegenkraft beim Überschreiten der ersten bzw. zweiten definierten Position erzeugt.

Vorzugsweise ist das erste Paar von Federelementen weiter von der Drehachse weg und das zweite Paar von Federelementen näher an der Drehachse angeordnet ist.

Gemäß einer bevorzugten Ausführungsform der Erfindung umfassen die Federelemente jeweils eine Spiralfeder, einen zwischen diese und das Betätigungselement gekoppelten Druckstößel und eine mittels eines Gewindestiftes im Sinne einer Veränderung der Federvorspannung verschiebbare Druckplatte.

Vorzugsweise erzeugt die Federeinrichtung eine im Sinne der Erzeugung einer zum Bewegen des Betätigungselements weg von der Grundstellung erforderlichen Losbrechkraft bemessene Vorspannung.

Vorzugsweise ist der Signalerzeuger durch ein Linearpotentiometer gebildet.

Das Linearpotentiometer kann über einen Betätigungsstift mit dem Betätigungselement gekoppelt sein.

Die Signalerzeugungseinrichtung kann durch einen Bordcomputer des Flugzeugs oder durch eine eigene elektronische Schaltung gebildet sein.

Gemäß einer bevorzugten Ausführungsform der Erfindung ist es vorgesehen, dass die Federelemente und der Signalerzeuger in einer Gehäusebox angeordnet sind, an welcher auch der das Betätigungselement und den Handgriff tragende Hebel drehbar gelagert ist.

Gemäß einer bevorzugten Ausführungsform der Erfindung ist die Gehäusebox durch zwei jeweils einander gegenüberliegend seitlich des Betätigungselements angeordnete, sich parallel zur Bewegungsrichtung des Betätigungselements erstreckende Gehäuseplatte begrenzt, an welcher die Federelemente und der Signalerzeuger befestigt sind.

Im folgenden wird ein Ausführungsbeispiel der erfindungsgemäßen kraftgesteuerten Throttle anhand der Zeichnung erläutert.

Es zeigt:
Figur 1 eine perspektivische Darstellung einer kraftgesteuerten Throttle zum Einstellen des Triebwerkschubs eines Kampfflugzeugs gemäß einem bevorzugten Ausführungsbeispiel der Erfindung, wobei eine die Signalerzeugungseinrichtung enthaltende Gehäusebox geöffnet dargestellt ist, von der Rückseite der Gehäusebox her gesehen;
Figur 2 eine perspektivische Ansicht der kraftgesteuerten Throttle gemäß dem in Figur 1 gezeigten Ausführungsbeispiel mit geschlossener Gehäusebox, ebenfalls von der Rückseite her gesehen;
Figur 3 eine perspektivische Ansicht der kraftgesteuerten Throttle gemäß dem in Figur 1 und 2 gezeigten Ausführungsbeispiel von der Vorderseite her gesehen;
Figur 4 eine Seitenansicht der kraftgesteuerten Throttle des in Figur 1 bis 3 gezeigten Ausführungsbeispiels der Erfindung im Schnitt von der Rückseite her gesehen und zusätzlich mit einem stark schematisierten Funktionsschema ergänzt; und
Figur 5 ein Diagramm, welches den Steuerkraftverlauf am Handgriff der kraftgesteuerten Throttle in Abhängigkeit vom Weg und von verschiedenen Losbrechkräften zeigt.

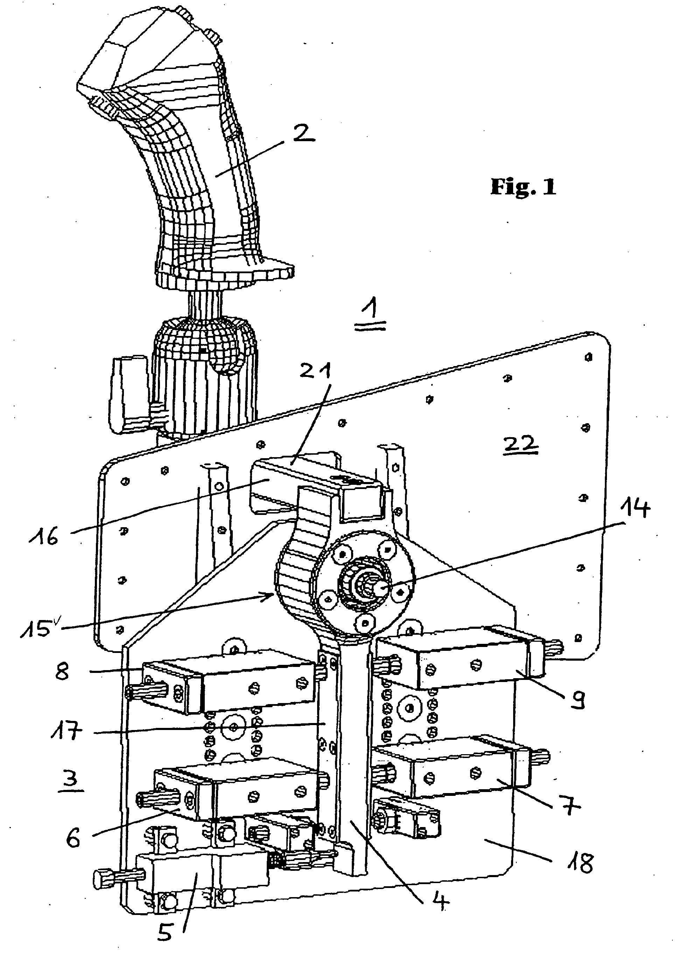

In den Figuren 1 bis 3 ist in verschiedenen perspektivischen Darstellungen eine kraftgesteuerte Throttle, d.h. ein kraftgesteuerter Schubhebel zum Einstellen des Triebwerkschubs eines Kampfflugzeugs gemäß einem Ausführungsbeispiel der Erfindung gezeigt, welche insgesamt mit dem Bezugszeichen 1 bezeichnet ist.

Die kraftgesteuerte Throttle 1 umfasst einen Handgriff 2, der zur Betätigung durch einen Piloten vorgesehen ist. Mit dem Handgriff 2 ist eine insgesamt mit dem Bezugszeichen 3 bezeichnete Signalerzeugungseinrichtung gekoppelt, die zur Erzeugung eines Steuersignals dient, welches in einer später noch näher beschriebenen Weise zum Einstellen des Triebwerkschubs des Kampfflugzeugs verwendet wird. Die Signalerzeugungseinrichtung 3 erzeugt dieses Steuersignal in Abhängigkeit von der bei der Betätigung durch den Piloten auf den Handgriff 2 ausgeübten Kraft, d.h. in Abhängigkeit von deren Richtung, also ob nach vorne oder nach hinten, und in Abhängigkeit von deren Kraft.

Die Signalerzeugungseinrichtung 3 enthält ein federnd elastisches Betätigungselement 4 und einen mit dem Betätigungselement 4 funktionsmäßig verbundenen Signalerzeuger 5, bei dem dargestellten Ausführungsbeispiel in Form eines Linearpotentiometers. Der Signalerzeuger 5 ist zur Erzeugung des oben genannten Steuersignals vorgesehen so, dass es die durch den Piloten auf den Handgriff 2 ausgeübte Kraft repräsentiert.

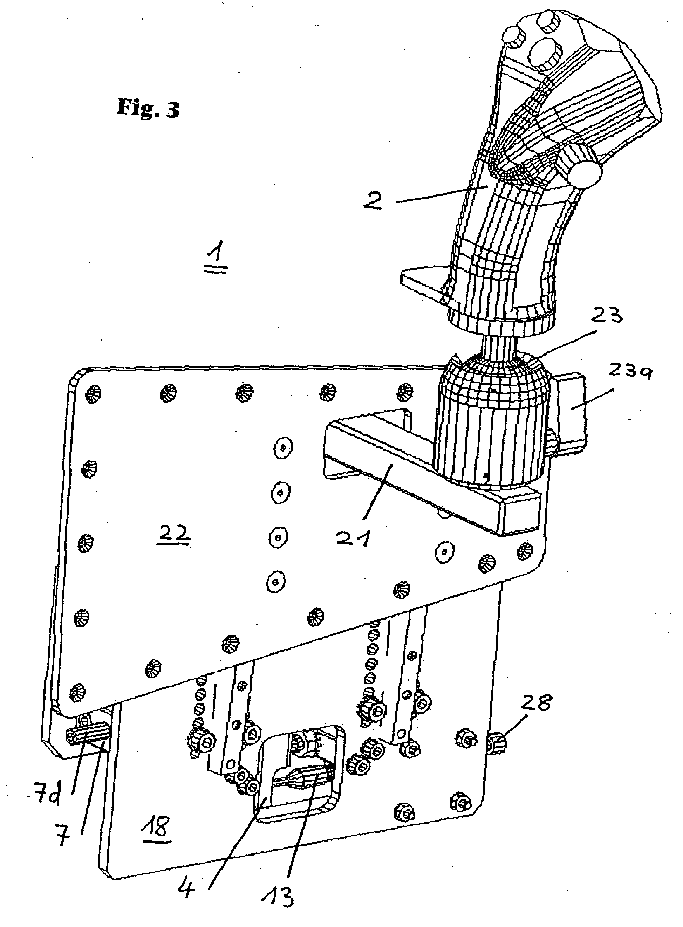

Die Throttle 1 umfasst einen zweiseitigen Hebel 15, der in einem mittleren Bereich um eine Drehachse 14 über einen gewissen vorgegebenen, relativ kleinen Winkelbereich drehbar gelagert ist und dessen einer Hebelarm 16 den vom Piloten zu betätigenden Handgriff 2 trägt und dessen anderer Hebelarm 17 das Betätigungselement 4 trägt bzw. bildet. Der Handgriff 2 ist mit dem ersten Hebelarm 16 über einen Kragarm 21 verbunden, wobei zwischen dem Kragarm 21 und dem Handgriff 2 nochmals, wie insbesondere aus Figur 3 ersichtlich ist, eine Kugelgelenk 23 vorgesehen ist, das mittels einer Feststellschraube 23a lösbar und in verschiedenen Positionen feststellbar ist, um den jeweiligen ergonomischen Bedürfnissen des Piloten Rechnung zu tragen.

Das Betätigungselement 4 ist entsprechend der vom Piloten auf den Handgriff 2 ausgeübten Kraft über einen vorgegebenen Betätigungsweg bewegbar, so dass der mit dem Betätigungselement 4, nämlich mit dessen unterem Ende gekoppelte Signalerzeuger 5 das Steuersignal entsprechend dem Betätigungsweg des Betätigungselements 4 erzeugt. Dabei wird auf das Betätigungselement 4 mittels einer durch zwei Paare von Federelementen 6, 7, 8, 9 gebildeten Federeinrichtung eine der Bewegung über den vorgegebenen Betätigungsweg und damit der durch den Piloten auf den Handgriff 2 ausgeübten Kraft entgegenwirkende Gegenkraft ausgeübt.

Die die Federeinrichtung bildenden Federelemente 6, 7, 8, 9 sind in Bewegungsrichtung des Betätigungselements 4 wirksam, wobei ein erstes Paar von Federelementen 6, 7 weiter von der Drehachse 14 weg, also weiter unten, angeordnet ist und ein zweites Paar von Federelementen 8, 9 näher an der Drehachse 14, also weiter oben, angeordnet ist. Die Federelemente 6, 7 des ersten Paars und die Federelemente 8, 9 des zweiten Paars sind jeweils einander gegenüberliegend auf verschiedenen Seiten des Betätigungselements 4 angeordnet.

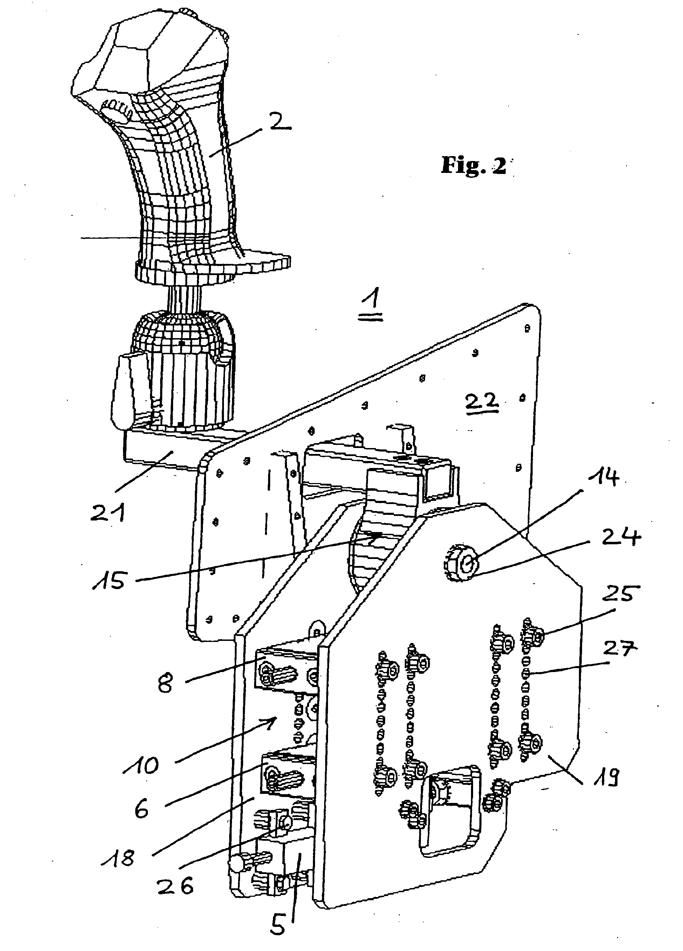

Die Federelemente 6, 7, 8, 9 und der Signalgeber 5 sind in einer Gehäusebox 10 angeordnet, siehe insbesondere Figur 2, an welcher auch der das Betätigungselement 4 bildende und den Handgriff 2 tragende Hebel 15 mittels der Drehachse 14 drehbar gelagert ist. Die Gehäusebox 10 ist bei dem dargestellten Ausführungsbeispiel durch zwei jeweils einander gegenüberliegend seitlich des Betätigungselements 4 angeordnete und sich parallel zur Bewegungsrichtung des Betätigungselements 4 erstreckende Gehäuseplatten 18, 19 begrenzt. Diese Gehäuseplatten 18, 19 tragen die Federelemente 6, 7, 8, 9 mittels Befestigungsschrauben 25, die durch Löcher 27 in den Gehäuseplatten 18, 19 geschraubt sind, sowie auch den Signalerzeuger 5, welcher durch Befestigungsschrauben 25 an der ersten Gehäuseplatte 18 angeschraubt ist, vergleiche wieder Figur 2. Wenn, wie bei dem dargestellten Ausführungsbeispiel, mehrere gegeneinander versetzte Löcher 27 für die Befestigungsschrauben 25 vorgesehen sind, können die Federelemente 6, 7, 8, 9 in unterschiedlichen Höhen befestigt werden, so dass sie mit unterschiedlichen wirksamen Hebelarmen an dem Betätigungselement 4 und damit an den zweiten Hebelarm 17 des Hebels 15 angreifen. Dies ist insbesondere für Versuchs- und Erprobungszwecke nützlich.

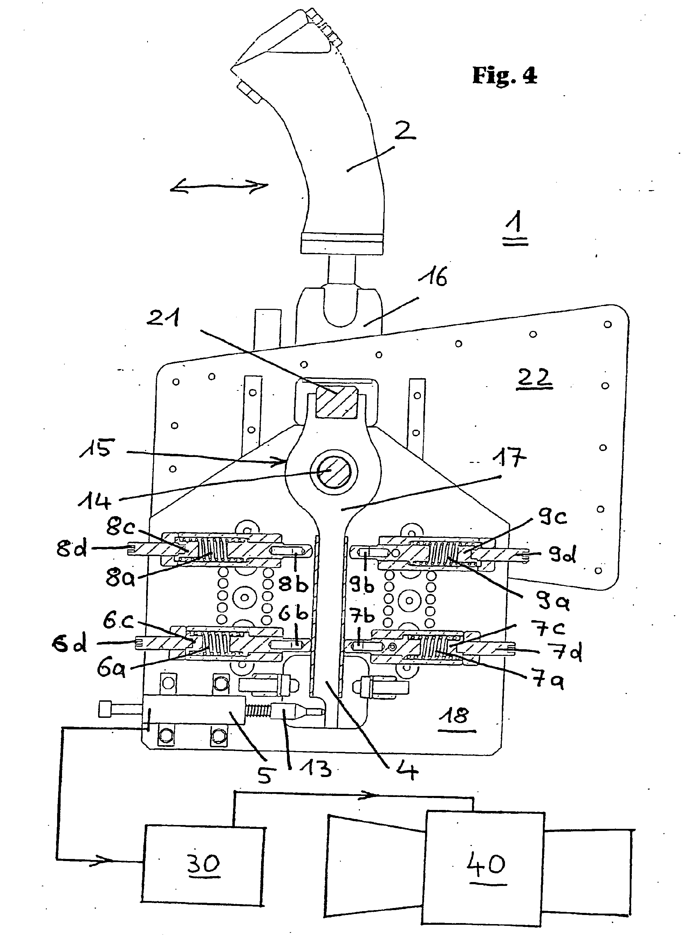

Wie Figur 4 zeigt, umfassen die Federelemente 6, 7, 8, 9 jeweils eine Spiralfeder 6a, 7a, 8a, 9a, einen zwischen diese und das Betätigungselement 4 gekoppelten Druckstößel 6b, 7b, 8b, 9b und eine Druckplatte 6c, 7c, 8c, 9c, die mittels eines Gewindestifts 6d, 7d, 8d, 9d im Sinne einer Veränderung der Federvorspannung verschiebbar ist. Der Signalerzeuger 5 umfasst eine Justierschraube 28, mit welcher ein Betätigungsstift 13 verstellbar ist, der mittels einer Feder 13a gegen das Betätigungselement 4 unter Vorspannung gehalten wird.

Wie Figur 4 weiterhin zeigt, ist der Signalerzeuger 5, welcher das die von dem Piloten auf den Handgriff 2 ausgeübte Kraft in Richtung und Größe repräsentierende Steuersignal erzeugt, mit einer Signalerzeugungseinrichtung 30 gekoppelt, welche ihrerseits ein den absoluten Wert des Schubs des Triebwerks 40 repräsentierendes Stellsignal erzeugt. Stellsignalerzeugungseinrichtung 30 und Triebwerk 40 sind in Figur 4 stark vereinfacht und schematisiert dargestellt. Insbesondere erhält die Stellsignalerzeugungseinrichtung 30 neben dem Steuersignal des Signalerzeugers 5 selbstverständlich noch eine Vielzahl von anderen Parametern als Eingangsgrößen, die in Figur 4 nicht angedeutet sind, was sinngemäß auch für das Triebwerk 40 gilt. Die Stellsignalerzeugungseinrichtung 30 kann durch einen Bordcomputer oder durch eine eigene elektronische Schaltung des Flugzeugs gebildet sein.

Das erste Paar von Federelementen 6, 7 hält das Betätigungselement 4 in einer kraftfreien Grundstellung und erzeugt zwischen einem ersten Anschlag, der die Bewegung des Betätigungselements 4 in der ersten Richtung begrenzt, und einem zweiten Anschlag, der die Bewegung des Betätigungselements 4 in der zweiten Richtung begrenzt, eine stetig zunehmende Gegenkraft gegen die durch den Piloten auf den Handgriff 2 in der ersten bzw. in der zweiten Richtung ausgeübte Kraft.

Weiterhin erzeugt das zweite Paar von Federelementen 8, 9 beim Überschreiten einer ersten bzw. einer zweiten definierten Position, die jeweils zwischen der Grundstellung und dem ersten Anschlag bzw. dem zweiten Anschlag liegen, eine zusätzlich unstetig ansteigende und damit für den Piloten deutlich spürbare Gegenkraft. Um diese Gegenkraft wird die von dem Piloten auf den Handgriff 2 auszuübende Kraft ab dem Überschreiben der ersten bzw. der zweiten definierten Position in einer Stufe erhöht.

Weiterhin ist es vorgesehen, dass das erste Paar von Federelementen 6, 7 eine einstellbare Vorspannung erzeugt, die so bemessen ist, dass zum Bewegen des Betätigungselements 4 weg von der kraftfreien Grundstellung eine gewisse Losbrechkraft erforderlich ist, die eine unbeabsichtigte oder zu leichte Bewegung des Handgriffs 2 vermeidet.

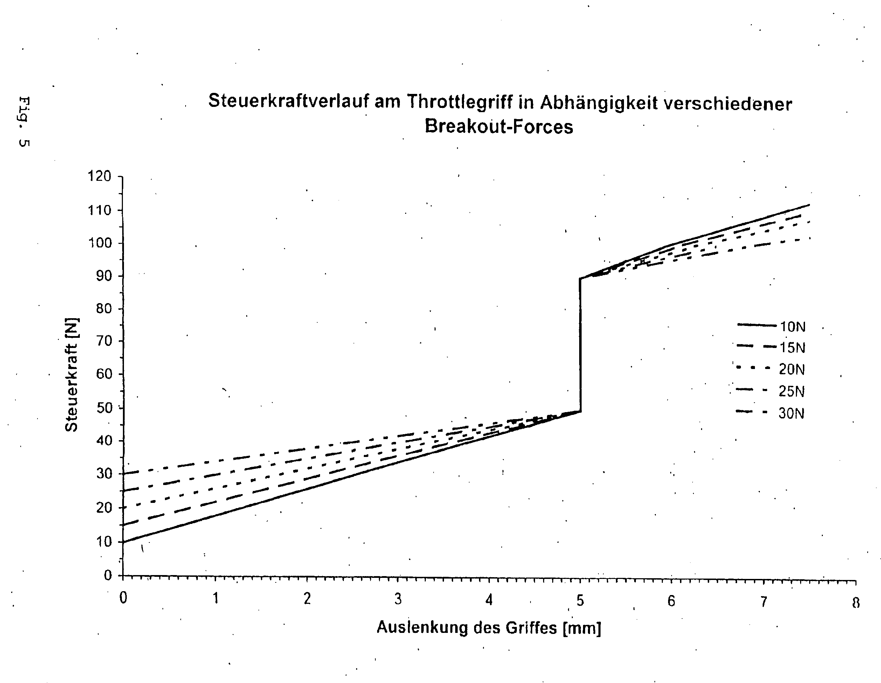

Figur 5 zeigt den Steuerkraftverlauf am Handgriff 2 in einer Richtung abhängig von der Auslenkung des Griffes von der kraftfreien Grundstellung für verschiedene Losbrechkräfte (Brakeout-Forces), wobei bei einer Auslenkung von 5 mm deutlich die durch das zweite Paar von Federelementen 8, 9 zusätzlich wirkende Gegenkraft erkennbar ist, hier befindet sich die vorher genannte zwischen der Grundstellung (0 mm) und dem Anschlag (7,5 mm) liegende definierte Position (5 mm).

Das Betätigungselement 4 ist somit entsprechend der vom Piloten auf den Handgriff 2 ausgeübten Kraft ausgehend von der kraftfreien Grundstellung in der ersten Richtung (nach vorn) oder in einer der ersten Richtung entgegengesetzten zweiten Richtung (nach hinten) bewegbar. Dabei erzeugt der Signalerzeuger 5 bei Bewegung in der ersten Richtung ein Steuersignal, welches von der Stellsignalerzeugungseinrichtung 30 im Sinne einer Erhöhung des Triebwerkschubs ausgewertet wird, und bei Bewegung in der zweiten Richtung ein Steuersignal, welches von der Stellsignalerzeugungseinrichtung 30 im Sinne einer Verringerung des Triebwerkschubs ausgewertet wird. Das Steuersignal, welches der Signalerzeuger 5 erzeugt, ist ein sich mit der Größe des Betätigungsweges bzw. der Bewegung des Betätigungselements 4 stetig änderndes Steuersignal, d.h. der Widerstand des den Signalerzeuger 5 bildenden Linearpotentiometers nimmt von einem Anschlag, beispielsweise dem ersten Anschlag, zu dem anderen Anschlag, beispielsweise dann dem zweiten Anschlag stetig zu, oder umgekehrt, jedenfalls besteht eine eindeutige Zuordnung zwischen Steuersignal, d.h. dem Widerstand des Signalerzeugers 5 und Stellung des Betätigungselements 4.

Insgesamt ist das Betätigungselement 4 in der ersten Richtung zwischen der kraftfreien Grundstellung und dem ersten Anschlag, der einer maximalen Kraft in der ersten Richtung entspricht, und in der zweiten Richtung zwischen der kraftfreien Grundstellung und dem zweiten Anschlag, der einer maximalen Kraft in der zweiten Richtung entspricht, bewegbar. Der Kraftverlauf ist dabei in beiden Richtungen ähnlich wie der in Figur 5 dargestellte, wobei jedoch die Richtung der Kraft entgegengesetzt ist. Selbstverständlich kann der Steuerkraftverlauf für die beiden Richtungen nach Steigung und Größe der Auslenkung verschieden bemessen werden, falls dies sich aus ergonomischen oder betriebstechnischen Gründen anbietet.

Der Signalerzeuger 5 erzeugt bei Bewegung des Betätigungselements 4 in der ersten Richtung ein einer Erhöhung des Triebwerkschubs entsprechendes Steuersignal und bei Bewegung des Betätigungselements 4 in der zweiten Richtung ein einer Verringerung des Triebwerkschubs entsprechendes Steuersignal.

Wie bereits weiter oben erläutert und in Figur 5 dargestellt, ist im Betätigungsweg des Betätigungselements 4 in der ersten Richtung zwischen der Grundstellung und dem ersten Anschlag eine erste definierte Position vorgesehen, über die hinaus der Betätigungsweg in der ersten Richtung nur unter deutlich spürbarer unstetiger Vergrößerung der durch den Piloten ausgeübten Kraft vergrößerbar ist, und ebenso ist im Betätigungsweg des Betätigungselements 4 in der zweiten Richtung zwischen der Grundstellung und dem zweiten Anschlag eine zweite definierte Position vorgesehen, über die hinaus der Betätigungsweg in der zweiten Richtung wiederum nur unter deutlich spürbarer unstetiger Vergrößerung der durch den Piloten auf den Handgriff 2 ausgeübten Kraft vergrößerbar ist. Dies dient zur Steuerung des Nachbrenners, wenn ein solcher vorgesehen ist.

Eine Vergrößerung des Betätigungswegs über die erste definierte Position hinaus, verbunden mit einer entsprechenden Änderung des von dem Signalerzeuger 5 erzeugten Steuersignals, wird von der Stellsignalerzeugungseinrichtung 30 bei ausgeschaltetem Nachbrenner als Signal zum Einschalten des Nachbrenners gewertet. Dementsprechend wird eine Vergrößerung des Betätigungswegs in der zweiten Richtung über die zweite definierte Position hinaus, wiederum verbunden mit einer entsprechenden Änderung des von dem Signalerzeugers 5 abgegebenen Steuersignals, von der Stellsignalerzeugungseinrichtung 30 bei eingeschaltetem Nachbrenner als Signal zum Ausschalten des Nachbrenners gewertet.

Bei ausgeschaltetem Nachbrenner entspricht eine Bewegung des Betätigungselements 4 in der ersten Richtung ausgehend von der Grundstellung bis hin zu der ersten definierten Position einer Erhöhung des Triebwerkschubs bis auf maximalen Schub ohne Nachbrenner (max dry).

Bei eingeschaltetem Nachbrenner entspricht eine Bewegung des Betätigungselements 4 in der ersten Richtung zwischen der Grundstellung und der ersten definierten Position einer Erhöhung des Triebwerkschubs bis auf maximalen Schub mit Nachbrenner (max Afterburner).

Bei ausgeschaltetem Nachbrenner entspricht eine Bewegung des Betätigungselements 4 in der zweiten Richtung ausgehend von der Grundstellung bis hin zu der zweiten definierten Position einer Verringerung des Triebwerkschubs bis auf Leerlauf (idle).

Bei eingeschaltetem Nachbrenner entspricht eine Bewegung des Betätigungselements 4 in der zweiten Richtung ausgehend von der Grundstellung bis hin zu der zweiten definierten Position einer Verringerung des Triebwerkschubs bis auf minimalen Schub mit Nachbrenner (min Afterburner).

Durch die kraftgesteuerte Throttle kann ausgehend von einer kraftfreien Grundstellung des Handgriffs 2 nach dem Überschreiten einer anfänglichen Losbrechkraft (Breakout-Force) über einen beispielsweise 5 mm bis 12 mm großen Einstellbereich, der bis zu der ersten definierten Position reicht, der Triebwerkschub zwischen Leerlauf (idle) und vollem Schub ohne Nachbrenner (max dry) geregelt werden. Am Ende dieses Bereichs, also an der definierten ersten Position, spürt der Pilot einen erhöhten Widerstand. Überwindet er diesen, siehe die Stufe in Figur 5, so wird der Nachbrenner gezündet. Nach dieser Stufe lässt sich der Handgriff 2 noch um ca. 2 mm bis 3 mm weiter bewegen und kehrt nach Loslassen des Handgriffs 2 in die Ausgangsstellung zurück. Der Pilot kann jetzt in dem genannten 5 mm bis 12 mm großen Regelbereich zwischen der kraftfreien Grundstellung und der ersten definierten Position die Triebwerksleistung zunehmend zwischen minimalen Schub mit Nachbrenner (min Afterburner) und maximalen Schub mit Nachbrenner (max Afterburner) einstellen. Die Reduzierung der Triebwerksleistung erfolgt durch eine Zugbewegung am Handgriff 2. Der Pilot spürt im Anschluss an den zwischen der kraftfreien Grundstellung und der zweiten definierten Position wiederum einen Widerstand mit unstetig ansteigender Kraft, vergleiche Figur 5. Überwindet er diesen, wird der Nachbrenner abgeschaltet und der Pilot kann den Triebwerkschub bis auf Leerlauf (idle) herunterregeln.

### Bezugszeichenliste

- 1: Throttle
- 2: Handgriff
- 3: Signalerzeugungseinrichtung
- 4: Betätigungselement
- 5: Signalerzeuger
- 6, 7, 8, 9: Federelement
- 6a, 7a, 8a, 9a: Spiralfeder
- 6b, 7b, 8b, 9b: Druckstößel
- 6c, 7c, 8c, 9c: Druckplatte
- 6d, 7d, 8d, 9d: Gewindestift
- 10: Gehäusebox
- 13: Betätigungsstift
- 13a: Feder
- 14: Drehachse
- 15: Hebel
- 16: erster Hebelarm
- 17: zweiter Hebelarm
- 18: erste Gehäuseplatte
- 19: zweite Gehäuseplatte
- 21: Kragarm
- 22: Verkleidungsplatte
- 23: Kugelgelenk
- 24: Befestigungsmutter
- 25: Befestigungsschraube
- 26: Befestigungsschraube
- 27: Löcher
- 28: Justierschraube
- 30: Stellsignalerzeugungseinrichtung
- 40: Triebwerk

## Patentansprüche

1. Kraftgesteuerter Schubregler zum Einstellen des Triebwerkschubs eines Kampfflugzeugs mit einem Handgriff (2) zur Betätigung durch einen Piloten und einer mit dem Handgriff (2) gekoppelten Signalerzeugungseinrichtung (3) zur Erzeugung eines zum Einstellen des Triebwerkschubs verwendeten Steuersignals, wobei die Signalerzeugungseinrichtung (3) zur Erzeugung des Steuersignals in Abhängigkeit von der bei der Betätigung durch den Piloten auf den Handgriff (2) ausgeübten Kraft vorgesehen ist, **dadurch gekennzeichnet, dass** die Signalerzeugungseinrichtung (3) ein gegen die durch den Piloten ausgeübte Kraft federnd elastisches Betätigungselement (4) und einen mit dem Betätigungselement (4) funktionsmäßig verbundenen Signalerzeuger (5) zur Erzeugung des Steuersignals enthält, so dass es die durch den Piloten auf den Handgriff (2) ausgeübte Kraft repräsentiert, und eine signalmäßig mit dem Signalerzeuger (5) verbundene Stellsignalerzeugungseinrichtung (30) zum Erzeugen eines den absoluten Wert des einzustellenden Triebwerkschubs repräsentierenden Stellsignals aus dem Steuersignal enthält.

2. Kraftgesteuerter Schubregler nach Anspruch 1, **dadurch gekennzeichnet, dass** das Betätigungselement (4) entsprechend einer vom Piloten ausgeübten Kraft über einen vorgegebenen Betätigungsweg bewegbar angeordnet ist, und dass der mit dem Betätigungselement (4) funktionsmäßig verbundene Signalerzeuger (5) zur Erzeugung eines dem Betätigungsweg entsprechenden Steuersignals vorgesehen ist.

3. Kraftgesteuerter Schubregler nach Anspruch 2, **dadurch gekennzeichnet, dass** das Betätigungselement (4) schwenkbar oder verschiebbar gelagert ist und mit einer Federeinrichtung (6, 7, 8, 9) gekoppelt ist, die eine der Bewegung über den vorgegebenen Betätigungsweg entgegenwirkende Gegenkraft erzeugt.

4. Kraftgesteuerter Schubregler nach Anspruch 2 oder 3, **dadurch gekennzeichnet, dass** das Betätigungselement (4) entsprechend einer vom Piloten ausgeübten Kraft ausgehend von einer kraftfreien Grundstellung in einer ersten Richtung oder in einer der ersten Richtung entgegengesetzten zweiten Richtung bewegbar angeordnet ist, wobei der Signalerzeuger (5) bei Bewegung in der ersten Richtung zur Erzeugung von Steuersignalen im Sinne einer Erhöhung des Triebwerkschubs und bei Bewegung in der zweiten Richtung zur Erzeugung von Steuersignalen im Sinne einer Verringerung des Triebwerkschubs vorgesehen ist.

5. Kraftgesteuerter Schubregler nach einem der Ansprüche 2 bis 4, **dadurch gekennzeichnet, dass** der Signalerzeuger (5) ein sich mit der Größe des Betätigungsweges stetig änderndes Steuersignal erzeugt.

6. Kraftgesteuerter Schubregler nach Anspruch 4 oder 5, **dadurch gekennzeichnet, dass** das Betätigungselement (4) in der ersten Richtung zwischen der Grundstellung und einem ersten Anschlag der einer maximalen Kraft in der ersten Richtung entspricht, und in der zweiten Richtung zwischen der Grundstellung und einem zweiten Anschlag der einer maximalen Kraft in der zweiten Richtung entspricht, bewegbar ist, wobei der Signalerzeuger (5) bei Bewegung des Betätigungselements (4) in der ersten Richtung einer Erhöhung des Triebwerkschubs und bei Bewegung des Betätigungselements (4) in der zweiten Richtung einer Verringerung des Triebwerkschubs entsprechende Steuersignale erzeugt.

7. Kraftgesteuerter Schubregler nach Anspruch 6 für ein Triebwerk mit Nachbrenner, **dadurch gekennzeichnet, dass** im Betätigungsweg des Betätigungselements (4) in der ersten Richtung zwischen der Grundstellung und dem ersten Anschlag eine erste definierte Position vorgesehen ist, über die hinaus der Betätigungsweg in der ersten Richtung nur unter deutlicher unstetiger Vergrößerung der durch den Piloten ausgeübten Kraft vergrößerbar ist, wobei bei einer Vergrößerung des Betätigungswegs über die definierte Position hinaus der Signalerzeuger (5) bei ausgeschaltetem Nachbrenner ein einem Einschalten des Nachbrenners entsprechendes Steuersignal erzeugt.

8. Kraftgesteuerter Schubregler nach Anspruch 6 oder 7 für ein Triebwerk mit Nachbrenner, **dadurch gekennzeichnet, dass** im Betätigungsweg des Betätigungselements (4) in der zweiten Richtung zwischen der Grundstellung und dem zweiten Anschlag eine zweite definierte Position vorgesehen ist, über die hinaus der Betätigungsweg des Betätigungselements (4) in der zweiten Richtung nur unter deutlicher unstetiger Vergrößerung der durch den Piloten ausgeübten Kraft vergrößerbar ist, wobei bei einer Vergrößerung des Betätigungswegs über die zweite definierte Position hinaus der Signalerzeuger (5) bei eingeschaltetem Nachbrenner ein einem Ausschalten des Nachbrenners entsprechendes Steuersignal erzeugt.

9. Kraftgesteuerter Schubregler nach Anspruch 7, **dadurch gekennzeichnet, dass** eine Bewegung des Betätigungselements (4) in der ersten Richtung zwischen der Grundstellung und der ersten definierten Position bei ausgeschaltetem Nachbrenner einer Erhöhung des Triebwerkschubs bis auf maximalen Schub ohne Nachbrenner entspricht.

10. Kraftgesteuerter Schubregler nach Anspruch 7, 8 oder 9, **dadurch gekennzeichnet, dass** eine Bewegung des Betätigungselements (4) in der ersten Richtung zwischen Grundstellung und der ersten definierten Position bei eingeschaltetem Nachbrenner einer Erhöhung des Triebwerkschubs bis auf maximalen Schub mit Nachbrenner entspricht.

11. Kraftgesteuerter Schubregler nach einem der Ansprüche 8 bis 10, **dadurch gekennzeichnet, dass** eine Bewegung des Betätigungselements (4) in der zweiten Richtung zwischen der Grundstellung und der zweiten definierten Position bei ausgeschaltetem Nachbrenner einer Verringerung des Triebwerkschubs bis auf Leerlauf entspricht.

12. Kraftgesteuerter Schubregler nach einem der Ansprüche 8 bis 11, **dadurch gekennzeichnet, dass** eine Bewegung des Betätigungselements (4) in der zweiten Richtung zwischen der Grundstellung und der zweiten definierten Position bei eingeschaltetem Nachbrenner einer Verringerung des Triebwerkschubs bis auf minimalen Schub mit Nachbrenner entspricht.

13. Kraftgesteuerter Schubregler nach einem der Ansprüche 3 bis 12, **dadurch gekennzeichnet, dass** das Betätigungselement (4) durch einen Hebelarm eines um eine Drehachse (14) drehbar gelagerten Hebels (15) gebildet ist, dessen Ende dem vom Piloten betätigten Handgriff (2) trägt.

14. Kraftgesteuerter Schubregler nach Anspruch 13, **dadurch gekennzeichnet, dass** der Hebel (15) ein um eine in einem mittleren Bereich vorgesehene Drehachse (14) drehbar gelagerter zweiseitiger Hebel ist, dessen einer Hebelarm (16) den vom Piloten zu betätigenden Handgriff (2) trägt und dessen anderer Hebelarm (17) das Betätigungselement (4) bildet.

15. Kraftgesteuerter Schubregler nach einem der Ansprüche 3 bis 14, **dadurch gekennzeichnet, dass** die Federeinrichtung durch in Bewegungsrichtung des Betätigungselements (4) wirksame, mit dem Betätigungselement (4) gekoppelte Federelemente (6, 7, 8, 9) gebildet ist.

16. Kraftgesteuerter Schubregler nach Anspruch 15, **dadurch gekennzeichnet, dass** die Federelemente (6, 7, 8, 9) in Bewegungsrichtung des Betätigungselements (4) paarweise einander gegenüberliegend beiderseits des Betätigungselements (4) angeordnet sind.

17. Kraftgesteuerter Schubregler nach Anspruch 16 in Verbindung mit einem der Ansprüche 7 bis 12, **dadurch gekennzeichnet, dass** ein erstes Paar von Federelementen (6, 7) und ein zweites Paar von Federelementen (8, 9) vorgesehen sind, die in Bewegungsrichtung des Betätigungselements (4) jeweils paarweise einander gegenüberliegend beiderseits des Betätigungselements (4) angeordnet sind, wobei das erste Paar von Federelementen (6, 7) eine zwischen der Grundstellung und dem ersten bzw. zweiten Anschlag des Betätigungselements (4) stetig zunehmende Gegenkraft gegen die durch den Piloten auf den Handgriff (2) ausgeübte Kraft erzeugt und das zweite Paar von Federelementen (8, 9) eine zusätzliche Gegenkraft beim Überschreiten der ersten bzw. zweiten definierten Position erzeugt.

18. Kraftgesteuerter Schubregler nach Anspruch 17 in Verbindung mit Anspruch 14, **dadurch gekennzeichnet, dass** das erste Paar von Federelementen (6, 7) weiter von der Drehachse (14) weg und das zweite Paar von Federelementen (8, 9) näher an der Drehachse (14) angeordnet ist.

19. Kraftgesteuerter Schubregler nach einem der Ansprüche 15 bis 18, **dadurch gekennzeichnet, dass** die Federelemente (6, 7, 8, 9) jeweils eine Spiralfeder (6a, 7a, 8a, 9a), einen zwischen diese und das Betätigungselement (4) gekoppelten Druckstößel (6b, 7b, 8b, 9b) und eine mittels eines Gewindestiftes (6d, 7d, 8d, 9d) im Sinne einer Veränderung der Federvorspannung verschiebbare Druckplatte (6c, 7c, 8c, 9c) umfassen.

20. Kraftgesteuerter Schubregler nach einem der Ansprüche 3 bis 19, **dadurch gekennzeichnet, dass** die Federeinrichtung (6, 7, 8, 9) eine im Sinne der Erzeugung einer zum Bewegen des Betätigungselements (4) weg von der Grundstellung erforderlichen Losbrechkraft bemessene Vorspannung erzeugt.

21. Kraftgesteuerter Schubregler nach einem der Ansprüche 1 bis 20, **dadurch gekennzeichnet, dass** der Signalerzeuger (5) durch ein Linearpotentiometer gebildet ist.

22. Kraftgesteuerter Schubregler nach Anspruch 21, **dadurch gekennzeichnet, dass** das Linearpotentiometer (5) über einen Betätigungsstift (13) mit dem Betätigungselement (4) gekoppelt ist.

23. Kraftgesteuerter Schubregler nach einem der Ansprüche 1 bis 22, **dadurch gekennzeichnet, dass** die Signalerzeugungseinrichtung (30) durch einen Bordcomputer des Flugzeugs oder durch eine eigene elektronische Schaltung gebildet ist.

24. Kraftgesteuerter Schubregler nach einem der Ansprüche 15 bis 23, **dadurch gekennzeichnet, dass** die Federelemente (6, 7, 8, 9) und der Signalerzeuger (5) in einer Gehäusebox (10) angeordnet sind, an welcher auch der das Betätigungselement (4) und den Handgriff (2) tragende Hebel (15) drehbar gelagert ist.

25. Kraftgesteuerter Schubregler nach Anspruch 24, **dadurch gekennzeichnet, dass** die Gehäusebox (10) durch zwei jeweils einander gegenüberliegend seitlich des Betätigungselements (4) angeordnete, sich parallel zur Bewegungsrichtung des Betätigungselements (4) erstreckende Gehäuseplatten (18, 19) begrenzt ist, an welchen die Federelemente (6, 7, 8, 9) und der Signalerzeuger (5) befestigt sind.

## Claims

1. A force-controlled power lever for adjusting the thrust of the engine of a combat aircraft with a handle (2) for operation by a pilot and a signal-generating device (3) coupled to the handle (2) for generating a control signal used to adjust the thrust of the engine, the signal-generating device (3) being provided to generate the control signal as a function of the force exerted on the handle (2) by the pilot during operation, **characterized in that** the signal-generating device (3) contains an elastic actuating element (4) that is spring-mounted elastic against the force exerted by the pilot and a signal generator (5) operatively connected to the actuating element (4) for generating the control signal, so that it represents the force exerted by the pilot on the handle (2), and an actuating signal generating device (30) connected in terms of a signal to the signal generator (5) for generating from the control signal an actuating signal representing the absolute value of the engine thrust to be adjusted.

2. A force-controlled power lever according to claim 1, **characterized in that** the actuating element (4) is arranged movably according to a force exerted by the pilot over a predetermined actuating path, and that the signal generator (5) operatively connected to the actuating element (4) is provided for generating a control signal corresponding to the actuating path.

3. A force-controlled power lever according to claim 2, **characterized in that** the actuating element (4) is supported swivellably or displaceably and is coupled to a spring device (6, 7, 8, 9), which produces a counterforce acting oppositely to the movement over the predetermined actuating path.

4. A force-controlled power lever according to claim 2 or 3, **characterized in that** the actuating element (4) is arranged movably according to a force exerted by the pilot in a first direction or in a second direction opposite to the first direction, starting out from a force-free basic position, the signal generator (5) being provided to generate control signals in the sense of an increase in the engine thrust on movement in the first direction and to generate control signals in the sense of a reduction in the engine thrust on movement in the second direction.

5. A force-controlled power lever according to one of claims 2 to 4, **characterized in that** the signal generator (5) generates a control signal that changes steadily with the magnitude of the actuating path.

6. A force-controlled power lever according to claim 4 or 5, **characterized in that** the actuating element (4) is movable in the first direction between the basic position and a first limit stop, which corresponds to a maximum force in the first direction, and in the second direction between the basic position and a second limit stop, which corresponds to a maximum force in the second direction, the signal generator (5) generating control signals corresponding to an increase in the engine thrust on movement of the actuating element (4) in the first direction and to a reduction in the engine thrust on movement of the actuating element (4) in the second direction.

7. A force-controlled power lever according to claim 6 for an engine with afterburner, **characterized in that**, in the actuating path of the actuating element (4) in the first direction between the basic position and the first limit stop, a first defined position is provided, beyond which the actuating path in the first direction can only be increased under marked discontinuous augmentation of the force exerted by the pilot, the signal generator (5), if the afterburner is turned off, generating a control signal corresponding to turning-on of the afterburner in the event of an increase in the actuating path beyond the defined position.

8. A force-controlled power lever according to claim 6 or 7 for an engine with afterburner, **characterized in that**, in the actuating path of the actuating element (4) in the second direction between the basic position and the second limit stop, a second defined position is provided, beyond which the actuating path of the actuating element (4) in the second direction can only be increased under marked discontinuous augmentation of the force exerted by the pilot, the signal generator (5), if the afterburner is turned on, generating a control signal corresponding to turning-off of the afterburner in the event of an increase in the actuating path beyond the second defined position.

9. A force-controlled power lever according to claim 7, **characterized in that** a movement of the actuating element (4) in the first direction between the basic position and the first defined position when the afterburner is turned off corresponds to an increase in the engine thrust up to maximum thrust without afterburner.

10. A force-controlled power lever according to claim 7, 8 or 9, **characterized in that** a movement of the actuating element (4) in the first direction between the basic position and the first defined position when the afterburner is turned on corresponds to an increase in the engine thrust up to maximum thrust with afterburner.

11. A force-controlled power lever according to one of claims 8 to 10, **characterized in that** a movement of the actuating element (4) in the second direction between the basic position and the second defined position when the afterburner is turned off corresponds to a reduction in the engine thrust down to idling.

12. A force-controlled power lever according to one of claims 8 to 11, **characterized in that** a movement of the actuating element (4) in the second direction between the basic position and the second defined position when the afterburner is turned on corresponds to a reduction in the engine thrust down to minimum thrust with afterburner.

13. A force-controlled power lever according to one of claims 3 to 12, **characterized in that** the actuating element (4) is formed by a lever arm of a lever (15) supported pivotably around a fulcrum (14), the end of which lever is provided with the handle (2) operated by the pilot.

14. A force-controlled power lever according to claim 13, **characterized in that** the lever (15) is a bilateral lever supported pivotably around a fulcrum (14) provided in a central area, one lever arm (16) of which lever carries the handle (2) to be operated by the pilot and the other lever arm (17) of which forms the actuating element (4).

15. A force-controlled power lever according to one of claims 3 to 14, **characterized in that** the spring device is formed by spring elements (6, 7, 8, 9) acting in the direction of movement of the actuating element (4) and coupled to the actuating element (4).

16. A force-controlled power lever according to claim 15, **characterized in that** the spring elements (6, 7, 8, 9) are arranged in the direction of movement of the actuating element (4) in pairs lying opposite one another on both sides of the actuating element (4).

17. A force-controlled power lever according to claim 16 in combination with one of claims 7 to 12, **characterized in that** a first pair of spring elements (6, 7) and a second pair of spring elements (8, 9) are provided, which are arranged in the direction of movement of the actuating element (4) respectively in pairs lying opposite one another on both sides of the actuating element (4), the first pair of spring elements (6, 7) generating a steadily increasing counterforce between the basic position and the first or second limit stop of the actuating element (4) against the force exerted by the pilot on the handle (2) and the second pair of spring elements (8, 9) generating an additional counterforce when the first or second defined position is exceeded.

18. A force-controlled power lever according to claim 17 in combination with claim 14, **characterized in that** the first pair of spring elements (6, 7) is arranged further away from the fulcrum (14) and the second pair of spring elements (8, 9) is arranged closer to the fulcrum (14).

19. A force-controlled power lever according to one of claims 15 to 18, **characterized in that** the spring elements (6, 7, 8, 9) each comprise a spiral spring (6a, 7a, 8a, 9a), a plunger (6b, 7b, 8b, 9b) coupled between this and the actuating element (4) and a pressure plate (6c, 7c, 8c, 9c) movable by means of a threaded pin (6d, 7d, 8d, 9d) in the sense of a change in the spring pretensioning.

20. A force-controlled power lever according to one of claims 3 to 19, **characterized in that** the spring device (6, 7, 8, 9) produces a pretensioning dimensioned for the purpose of generating a necessary breakout force for moving the actuating element (4) away from the basic position.

21. A force-controlled power lever according to one of claims 1 to 20, **characterized in that** the signal generator (5) is formed by a linear potentiometer.

22. A force-controlled power lever according to claim 21, **characterized in that** the linear potentiometer (5) is coupled to the actuating element (4) by an actuating pin (13).

23. A force-controlled power lever according to one of claims 1 to 22, **characterized in that** the signal-generating device (30) is formed by an on-board computer of the aircraft or by a self-contained electronic circuit.

24. A force-controlled power lever according to one of claims 15 to 23, **characterized in that** the spring elements (6, 7, 8, 9) and the signal generator (5) are arranged in a housing box (10), on which the lever (15) carrying the actuating element (4) and the handle (2) is also rotatably mounted.

25. A force-controlled power lever according to claim 24, **characterized in that** the housing box (10) is defined by two housing plates (18, 19) arranged to lie respectively opposite each other to the side of the actuating element (4), extending in parallel to the direction of movement of the actuating element (4), on which plates the spring elements (6, 7, 8, 9) and the signal generator (5) are fixed.

## Revendications

1. Manette de gaz pour le contrôle de la puissance du moteur d'un avion de combat et contrôlée par la force appliquée, munie d'une poignée (2) destinée à être actionnée par un pilote et d'un dispositif générateur de signaux (3) couplé à la poignée (2) en vue de générer un signal de commande utilisé pour contrôler la puissance du moteur, le dispositif générateur de signaux (3) étant prévu pour générer le signal de commande en fonction de la force appliquée par le pilote sur la poignée (2) pendant l'actionnement, **caractérisée en ce que** le dispositif générateur de signaux (3) comprend un élément d'actionnement (4) élastique faisant ressort contre la force appliquée par le pilote et un générateur de signaux (5) relié fonctionnellement à l'élément d'actionnement (4) en vue de générer le signal de commande, de sorte qu'il représente la force appliquée par le pilote sur la poignée (2), et comprend un dispositif générateur de signaux de réglage (30) relié du point de vue du signal au générateur de signaux (5) en vue de générer à partir du signal de commande un signal de réglage représentant la valeur absolue de la puissance du moteur à ajuster.

2. Manette de gaz contrôlée par la force appliquée selon la revendication 1, **caractérisée en ce que** l'élément d'actionnement (4) est disposé de manière à pouvoir être déplacé sur un parcours d'actionnement prédéfini en fonction d'une force appliquée par le pilote, et **en ce que** le générateur de signaux (5) relié fonctionnellement à l'élément d'actionnement (4) est prévu pour générer un signal de commande correspondant au parcours d'actionnement.

3. Manette de gaz contrôlée par la force appliquée selon la revendication 2, **caractérisée en ce que** l'élément d'actionnement (4) est logé de manière à pouvoir pivoter ou à être déplacé, et est couplé à un dispositif à ressort (6, 7, 8, 9) qui génère une force opposée contrecarrant le mouvement effectué sur le parcours d'actionnement prédéfini.

4. Manette de gaz contrôlée par la force appliquée selon la revendication 2 ou 3, **caractérisée en ce que** l'élément d'actionnement (4) est disposé de manière à pouvoir être déplacé depuis une position initiale à force nulle dans une première direction ou dans une seconde direction opposée à la première direction en fonction d'une force appliquée par le pilote, le générateur de signaux (5) étant prévu lors du mouvement dans la première direction pour générer des signaux de commande dans le but d'augmenter la puissance du moteur et lors du mouvement dans la seconde direction pour générer des signaux de commande dans le but de réduire la puissance du moteur.

5. Manette de gaz contrôlée par la force appliquée selon l'une quelconque des revendications 2 à 4, **caractérisée en ce que** le générateur de signaux (5) génère un signal de commande variant de manière continue selon la grandeur du parcours d'actionnement.

6. Manette de gaz contrôlée par la force appliquée selon la revendication 4 ou 5, **caractérisée en ce que** l'élément d'actionnement (4) peut être déplacé dans la première direction entre la position initiale et une première butée, qui correspond à une force maximale dans la première direction, et peut être déplacé dans la seconde direction entre la position initiale et une seconde butée, qui correspond à une force maximale dans la seconde direction, le générateur de signaux (5) générant des signaux de commande correspondants lors du mouvement de l'élément d'actionnement (4) dans la première direction d'une augmentation de la puissance du moteur, et des signaux de commande correspondants lors du mouvement de l'élément d'actionnement (4) dans la seconde direction d'une réduction de la puissance du moteur.

7. Manette de gaz contrôlée par la force appliquée selon la revendication 6 pour un moteur équipé d'un dispositif de postcombustion, **caractérisée en ce que** sur le parcours d'actionnement de l'élément d'actionnement (4) dans la première direction entre la position initiale et la première butée est prévue une première position définie, au-delà de laquelle le parcours d'actionnement ne peut être agrandi dans la première direction qu'en augmentant considérablement de manière discontinue la force appliquée par le pilote, étant précisé qu'en cas d'agrandissement du parcours d'actionnement au-delà de la position définie le générateur de signaux (5) génère, lorsque le dispositif de postcombustion est arrêté, un signal de commande correspondant à une mise en marche du dispositif de postcombustion.

8. Manette de gaz contrôlée par la force appliquée selon la revendication 6 ou 7 pour un moteur équipé d'un dispositif de postcombustion, **caractérisée en ce que** sur le parcours d'actionnement de l'élément d'actionnement (4) dans la seconde direction entre la position initiale et la seconde butée est prévue une seconde position définie, au-delà de laquelle le parcours d'actionnement de l'élément d'actionnement (4) ne peut être agrandi qu'en augmentant considérablement de manière discontinue la force appliquée par le pilote, étant précisé qu'en cas d'agrandissement du parcours d'actionnement au-delà de la seconde position définie le générateur de signaux (5) génère, lorsque le dispositif de postcombustion est en marche, un signal de commande correspondant à un arrêt du dispositif de postcombustion.

9. Manette de gaz contrôlée par la force appliquée selon la revendication 7, **caractérisée en ce qu'**un mouvement de l'élément d'actionnement (4) dans la première direction entre la position initiale et la première position définie, lorsque le dispositif de postcombustion est arrêté, correspond à une augmentation de la puissance du moteur jusqu'à la puissance maximale sans dispositif de postcombustion.

10. Manette de gaz contrôlée par la force appliquée selon la revendications 7, 8 ou 9, **caractérisée en ce qu'**un mouvement de l'élément d'actionnement (4) dans la première direction entre la position initiale et la première position définie, lorsque le dispositif de postcombustion est en marche, correspond à une augmentation de la puissance du moteur jusqu'à la puissance maximale avec dispositif de postcombustion.

11. Manette de gaz contrôlée par la force appliquée selon l'une quelconque des revendications 8 à 10, **caractérisée en ce qu'**un mouvement de l'élément d'actionnement (4) dans la seconde direction entre la position initiale et la seconde position définie correspond, lorsque le dispositif de postcombustion est arrêté, à une réduction de la puissance du moteur jusqu'au ralenti.

12. Manette de gaz contrôlée par la force appliquée selon l'une quelconque des revendications 8 à 11, **caractérisée en ce qu'**un mouvement de l'élément d'actionnement (4) dans la seconde direction entre la position initiale et la seconde position définie correspond, lorsque le dispositif de postcombustion est en marche, à une réduction de la puissance du moteur jusqu'à la puissance minimale avec dispositif de postcombustion.

13. Manette de gaz contrôlée par la force appliquée selon l'une quelconque des revendications 3 à 12, **caractérisée en ce que** l'élément d'actionnement (4) est formé par un bras de levier d'un levier (15) logé de manière rotative autour d'un axe de rotation (14), levier dont l'extrémité porte la poignée (2) actionnée par le pilote.

14. Manette de gaz contrôlée par la force appliquée selon la revendication 13, **caractérisée en ce que** le levier (15) est un levier à deux faces logé de manière rotative autour d'un axe de rotation (14) prévu dans une zone médiane, un bras (16) dudit levier portant la poignée (2) à actionner par le pilote et l'autre bras (17) dudit levier formant l'élément d'actionnement (4).

15. Manette de gaz contrôlée par la force appliquée selon l'une quelconque des revendications 3 à 14, **caractérisée en ce que** le dispositif à ressort est formé par des éléments à ressort (6, 7, 8, 9) couplés à l'élément d'actionnement (4) et agissant dans le sens du mouvement de l'élément d'actionnement (4).

16. Manette de gaz contrôlée par la force appliquée selon la revendication 15, **caractérisée en ce que** les éléments à ressort (6, 7, 8, 9) sont disposés par paires opposées de part et d'autre de l'élément d'actionnement (4) dans le sens du mouvement de l'élément d'actionnement (4).

17. Manette de gaz contrôlée par la force appliquée selon la revendication 16 en rapport avec l'une quelconque des revendications 7 à 12, **caractérisée en ce qu'**une première paire d'éléments à ressort (6, 7) et une seconde paire d'éléments à ressort (8, 9) sont prévues, lesquelles sont respectivement disposées par paires opposées de part et d'autre de l'élément d'actionnement (4) dans le sens du mouvement de l'élément d'actionnement (4), la première paire d'éléments à ressort (6, 7) générant une force opposée à la force appliquée par le pilote sur la poignée (2) continuellement croissante entre la position initiale et la première et/ou seconde butée de l'élément d'actionnement (4), et la seconde paire d'éléments à ressort (8, 9) générant une force opposée supplémentaire en cas de dépassement de la première et/ou de la seconde position définie.

18. Manette de gaz contrôlée par la force appliquée selon la revendication 17 en rapport avec la revendication 14, **caractérisée en ce que** la première paire d'éléments à ressort (6, 7) est disposée à distance de l'axe de rotation (14) et **en ce que** la seconde paire d'éléments à ressort (8, 9) est disposée à proximité de l'axe de rotation (14).

19. Manette de gaz contrôlée par la force appliquée selon l'une quelconque des revendications 15 à 18, **caractérisée en ce que** les éléments à ressort (6, 7, 8, 9) comprennent respectivement un ressort en spirale (6a, 7a, 8a, 9a), un poussoir de pression (6b, 7b, 8b, 9b) couplé entre ledit ressort et l'élément d'actionnement (4) et une plaque de pression (6c, 7c, 8c, 9c) pouvant être poussée au moyen d'une tige filetée (6d, 7d, 8d, 9d) en vue de modifier la précontrainte du ressort.

20. Manette de gaz contrôlée par la force appliquée selon l'une quelconque des revendications 3 à 19, **caractérisée en ce que** le dispositif à ressort (6, 7, 8, 9) génère une précontrainte calculée en vue de générer une force de décollement nécessaire pour déplacer l'élément d'actionnement (4) loin de la position initiale.

21. Manette de gaz contrôlée par la force appliquée selon l'une quelconque des revendications 1 à 20, **caractérisée en ce que** le générateur de signaux (5) est formé par un potentiomètre linéaire.

22. Manette de gaz contrôlée par la force appliquée selon la revendication 21, **caractérisée en ce que** le potentiomètre linéaire (5) est couplé à l'élément d'actionnement (4) par le biais d'une cheville d'actionnement (13).

23. Manette de gaz contrôlée par la force appliquée selon l'une quelconque des revendications 1 à 22, **caractérisée en ce que** le dispositif générateur de signaux (30) est formé par un ordinateur de bord de l'avion ou par un propre circuit électronique.

24. Manette de gaz contrôlée par la force appliquée selon l'une quelconque des revendications 15 à 23, **caractérisée en ce que** les éléments à ressort (6, 7, 8, 9) et le générateur de signaux (5) sont disposés dans un boîtier (10) au niveau duquel est également logé de manière rotative le levier (15) portant l'élément d'actionnement (4) et la poignée (2).

25. Manette de gaz contrôlée par la force appliquée selon la revendication 24, **caractérisée en ce que** le boîtier (10) est délimité par deux plaques de boîtier (18, 19) s'étendant parallèlement au sens du mouvement de l'élément d'actionnement (4) et disposées respectivement l'une en face de l'autre à côté de l'élément d'actionnement (4), sur lesquelles sont fixés les éléments à ressort (6, 7, 8, 9) et le générateur de signaux (5).
